# EUROPEAN PATENT APPLICATION

(11) **EP 4 580 237 A1**
(43) Date of publication of application: **02.07.2025**
(21) Application number: 22956542.9
(22) Date of filing: 26.08.2022
(51) Int. Cl.: H04W 16/28, H04W 74/00

(54) **BASE STATION DEVICE, COMMUNICATION SYSTEM, BEAM SEARCH METHOD, AND PROGRAM**

(71) Applicant: NIPPON TELEGRAPH AND TELEPHONE CORPORATION, Chiyoda-ku, Tokyo 100-8116 (JP); NTT DOCOMO, INC., Tokyo 100-6150 (JP)
(72) Inventor: WAI Shuki, Musashino-shi, Tokyo 180-8585 (JP); IWAKUNI Tatsuhiko, Musashino-shi, Tokyo 180-8585 (JP); ARAI Takuto, Musashino-shi, Tokyo 180-8585 (JP); UCHIDA Daisei, Musashino-shi, Tokyo 180-8585 (JP); KITA Naoki, Musashino-shi, Tokyo 180-8585 (JP); KISHIYAMA Yoshihisa, Tokyo 100-6150 (JP); SUYAMA Satoshi, Tokyo 100-6150 (JP); MATSUMURA Yuki, Tokyo 100-6150 (JP); NONAKA Nobuhide, Tokyo 100-6150 (JP); OKUYAMA Tatsuki, Tokyo 100-6150 (JP)
(74) Representative: Brevalex
(86) International application number: PCT/JP2022/032247
(87) International publication number: WO 2024/042716

(57) **Abstract**

A base station device includes: a candidate beam determination unit configured to determine candidate beams that are candidates for a beam of a pilot signal to be transmitted for each terminal device that is a transmission partner; a beam ID assignment unit configured to assign a different beam ID to the candidate beam of the same terminal device and assign beam IDs to candidate beams among different terminal devices so that the number of combinations of the candidate beams to which the same beam ID is assigned is maximized; and a pilot signal generation unit configured to generate a pilot signal to be transmitted in a same time domain and a same frequency domain for each candidate beam to which the same beam ID is assigned.

## Description

### TECHNICAL FIELD

The present invention relates to a base station device, a communication system, a beam searching method, and a program.

### BACKGROUND ART

In high-frequency bands such as millimeter wave bands and terahertz bands, a free space propagation loss is greater compared to low-frequency bands such as microwave bands. Therefore, it is necessary to use beamforming technologies for forming beams concentrating power in specific directions to compensate for the loss (for example, see Non-Patent Document 1). Beamforming can be performed fixedly in advance, for example, in installation of wireless stations when positional relationships between wireless stations or propagation environments around the wireless stations do not change in point-to-point (P-P) communication in which combinations of the wireless stations that perform constantly communication are determined. However, in a case of point-to-multi point type in which a plurality of wireless stations are accommodated or a case where at least one of the wireless stations moves, beamforming cannot be performed fixedly. Adaptive beamforming becomes necessary to adaptively control a beam formation direction in accordance with a position of a wireless station requiring communication among the plurality of wireless stations, movement of the wireless station, and changes in a propagation environment around the wireless station.

It is general to perform adaptive beamforming by using a plurality of antenna elements and adjusting a phase relation of radio waves radiated between the antenna elements since a mechanical driving unit is not necessary. Here, in order to adjust the phase relation appropriately, it is necessary to ascertain a phase relation between antenna elements of both wireless stations of transmission and reception sides and then derive an appropriate phase relation. Therefore, in adaptive beamforming, known signals are transmitted by a plurality of candidate beams set discretely in advance and candidate beams determined to be most appropriate for communication among the plurality of candidate beams are selected. Methods of selecting the candidate beams have also been defined and installed in wireless communication systems put into practical use in recent years, such as 3GPP (registered trademark) 5th generation (5G) or IEEE802.11ad/ay (for example, see Non-Patent Documents 1, 2, and 3). In this way, beams to be used for communication are searched for.

As method of searching for beams for a plurality of terminal devices, there are a method of transmitting a signal by each candidate beam in a time-division manner using a single beam and a method of transmitting a signal with a difference frequency by each candidate beam in a frequency-division manner using multi-beams.

### Citation List

### Non-Patent Document

Non-Patent Document 1: "5G Multi- Antenna Technology," NTT DOCOMO Technical Journal, Vo. 23, No. 4, pp. 4039, January 2016
Non-Patent Document 2: Kazuaki Takeda et al., "Study Status of Physical Layer Element Technologies and High-Frequency Band Utilization in 5G," NTT DOCOMO Technical Journal, Vol. 25, No. 3, pp. 23 to 32, October 2017
Non-Patent Document 3: Koji Takinami et al., "Standardization Trends and Element Technologies of Millimeter Wave Wireless LAN Systems," IEICE Communications Society Magazine, No. 38, Autumn Issue, pp. 100-106, 2016"
Non-Patent Document 4: M. Giordani, M. Polese, A. Roy, D. Castor and M. Zorzi, "A Tutorial on Beam Management for 3GPP NR at mmWave Frequencies," in IEEE Communications Surveys & Tutorials, vol. 21, no. 1, pp. 173 to 196, Firstquarter 2019, doi: 10.1109/COMST. 2018.2869411.
Non-Patent Document 5: P. Zhou et al., "IEEE 802.11ay-Based mmWave WLANs: Design Challenges and Solutions," in IEEE Communications Surveys & Tutorials, vol. 20, no. 3, pp. 1654 to 1681, thirdquarter 2018, doi: 10.1109/COMST. 2018.2816920.

### SUMMARY OF INVENTION

### Technical Problem

However, in a time division method, there is a drawback that time resources increase in proportion to the number of terminal devices. In a frequency division method, there is a drawback that frequency resources increase in proportion to the number of terminal devices. The increase in the time resources may make beam searching incomplete within a predetermined time and it difficult to transmit data, for example, when the beam searching is performed periodically. The increase in the frequency resources may limit frequency resources used by other communication devices.

According to the present invention of the embodiments, it is possible to curb an increase in time and frequency resources in beam searching.

### Solution to Problem

According to an aspect of the present invention, a base station device includes: a candidate beam determination unit configured to determine candidate beams that are candidates for a beam of a pilot signal to be transmitted for each terminal device that is a transmission partner; a beam ID assignment unit configured to assign different beam IDs to the candidate beams of the same terminal device and assign beam IDs to candidate beams among different terminal devices so that the number of combinations of the candidate beams to which the same beam ID is assigned is maximized; and a pilot signal generation unit configured to generate a pilot signal to be transmitted in a same time domain and a same frequency domain for each candidate beam to which the same beam ID is assigned.

According to another aspect of the present invention, a beam searching method includes: a candidate beam determination step of determining candidate beams that are candidates for a beam of a pilot signal to be transmitted for each terminal device that is a transmission partner; a beam ID assignment step of assigning a different beam ID to the candidate beam of the same terminal device and assigning beam IDs to candidate beams among different terminal devices so that the number of combinations of the candidate beams to which the same beam ID is assigned is maximized; and a pilot signal generation step of generating a pilot signal to be transmitted in a same time domain and a same frequency domain for each candidate beam to which the same beam ID is assigned. Advantageous Effects of Invention

According to the base station device, the communication system, and the beam searching method of the present invention, it is possible to inhibit an increase in time and frequency resources in beam searching.

### BRIEF DESCRIPTION OF DRAWINGS

[FIG. 1] A diagram illustrating a configuration example of a communication system 1 according to a first embodiment.
[FIG. 2] A diagram illustrating a configuration example of a base station device 2 according to the first embodiment.
[FIG. 3] A diagram illustrating examples of candidate beams.
[FIG. 4] A diagram illustrating examples of beam IDs assigned to the candidate beams.
[FIG. 5] A diagram illustrating a relation example of a time frequency of a pilot signal transmitted from an antenna 21.
[FIG. 6] A diagram illustrating a configuration example of a terminal device 3 according to the first embodiment.
[FIG. 7] A sequence diagram illustrating an operation of the communication system 1.

### DESCRIPTION OF EMBODIMENTS

### (First Embodiment)

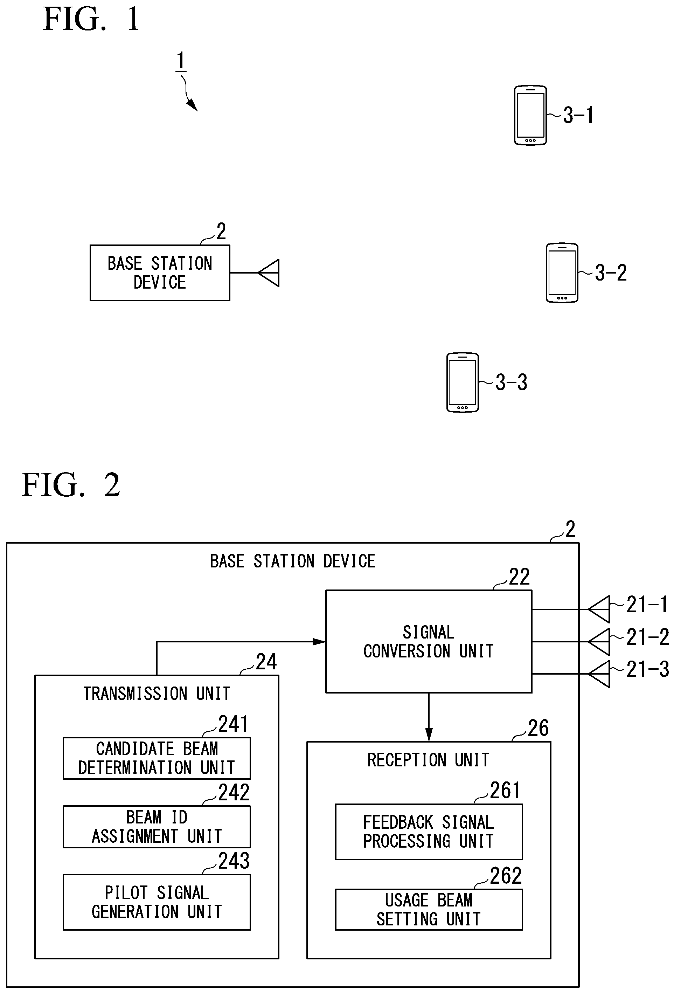

FIG. 1 is a diagram illustrating a configuration example of a communication system 1 according to a first embodiment. The communication system 1 includes one base station device 2 and a plurality of terminal devices 3 (for example, three terminal devices 3-1, 3-2, and 3-3). The base station device 2 communicate with the terminal devices 3.

FIG. 2 is a diagram illustrating a configuration example of a base station device 2 according to the first embodiment. The base station device 2 includes an antenna 21, a signal conversion unit 22, a transmission unit 24, and a reception unit 26. In the base station device 2, the signal conversion unit 22 converts a signal generated by the transmission unit 24 into an analog signal and the antenna 21 transmits the analog signal. The signal conversion unit 22 converts an analog signal received via the antenna 21 into a digital signal, and the reception unit 26 processes the digital signal.

The transmission unit 24 includes a candidate beam determination unit 241, a beam ID assignment unit 242, and a pilot signal generation unit 243.

The candidate beam determination unit 241 determines candidate beams that are candidates for a beam of a pilot signal to be transmitted for each terminal device 3. For example, of the wide beams searched for using a wide beam with a large width, a beam with a finer range than the wide beam with the best reception sensitivity for each terminal device 3 is determined as the candidate beam of that terminal device 3. For example, the periphery of the beam used when the base station device 2 transmits a signal for each terminal device 3 is determined as the candidate beam of this terminal device 3. The former method is performed, for example, when the base station device 2 and the terminal device 3 have not performed communication previously. The latter method is performed, for example, when the base station device 2 and the terminal device 3 have already performed communication.

The candidate beam determination unit 241 may select several beams from the plurality of beams determined in advance for each terminal device 3.

The number of candidate beams may differ for each terminal device 3.

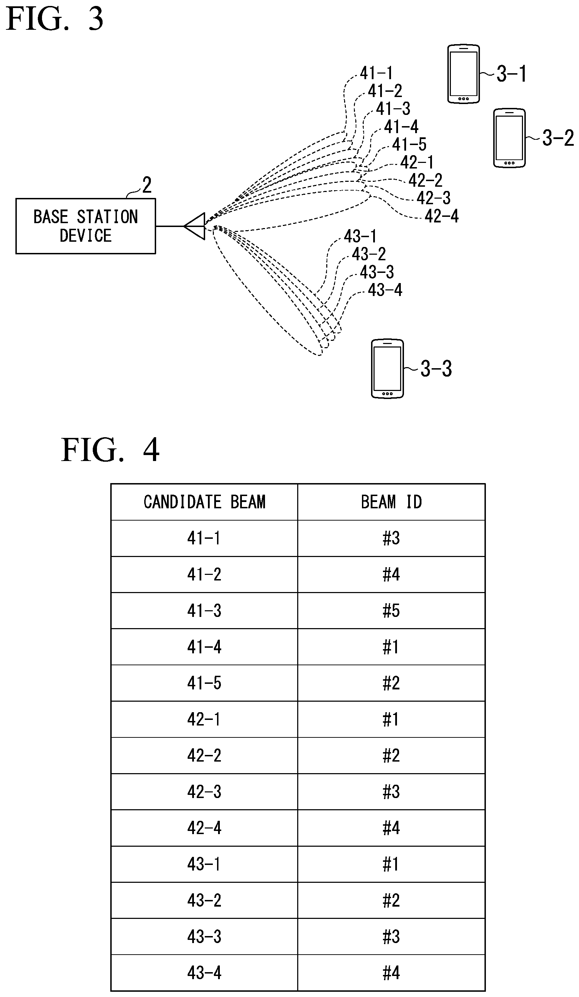

FIG. 3 is a diagram illustrating examples of candidate beams. The candidate beam determination unit 241 determines candidate beams 41-1 to 41-5 for the terminal device 3-1, candidate beams 42-1 to 42-4 for the terminal device 3-2, and candidate beams 43-1 to 43-4 for the terminal device 3-3.

The beam ID assignment unit 242 assigns beam IDs to the candidate beams. The beam ID assignment unit 242 assigns different beam IDs to the candidate beams of the same terminal device 3. The beam ID assignment unit 242 assigns beam IDs to candidate beams among the different terminal devices 3 so that the number of combinations of the candidate beams to which the same beam ID is assigned is maximized. For example, in an example illustrated in FIG. 3, the beam ID assignment unit 242 assigns beam IDs of #1 to #5 to the candidate beams 41-1 to 41-5, assigns beam IDs of #1 to #4 to the candidate beams 42-1 to 42-4, and assigns beam IDs of #1 to #4 to the candidate beams 43-1 to 43-4. Accordingly, the beam ID assignment unit 242 assigns different beam IDs to the candidate beams of the same terminal device 3 and assigns the beam IDs to the candidate beams among the different terminal devices 3 so that a combination of the candidate beams to which the same beam ID is assigned is a maximum of four (#1 to #4).

First, the beam ID assignment unit 242 determines the number of beam IDs. The number of beam IDs is a maximum value of the number of candidate beams for each terminal device 3. Thereafter, the beam ID assignment unit 242 assigns the beam IDs sequentially from #1 for each candidate beam for each terminal device 3.

When the candidate beams are duplicated among the terminal devices 3, the beam ID assignment unit 242 may assign the same beam ID to duplicated candidate beams. The fact that the candidate beams are duplicated means, for example, that an angle difference between centers of two beams is equal to or less than a predetermined angle. The candidate beam determination unit 241 assign the same beam ID when the same candidate beams are selected among the terminal devices 3 in a case where several beams are selected for each terminal device 3 from a plurality of beams determined in advance.

In the example illustrated in FIG. 3, the candidate beams 41-4 and 42-1 are duplicated, and the candidate beams 41-5 and 42-2 are duplicated. At this time, the beam ID assignment unit 242 may assign the same beam ID to the candidate beams 41-4 and 42-1 and assign the same beam ID to the candidate beams 41-5 and 42-2. FIG. 4 is a diagram illustrating examples of beam IDs assigned to the candidate beams. The same beam ID of #1 may be assigned to the candidate beams 41-4 and 42-1 and the same beam ID of #2 may be assigned to the candidate beams 41-5 and 42-2.

The pilot signal generation unit 243 generates pilot signals transmitted in the same time domain or the same frequency domain for each candidate beam to which the same beam ID is assigned. The pilot signal generation unit 243 may generate the pilot signals to be transmitted simultaneously or pilot signals to be transmitted at the same frequency for each candidate beam to which the same beam ID is assigned. When the pilot signals to be transmitted in the same time domain or simultaneously are generated from the candidate beams to which the same beam ID is assigned, the pilot signal generation unit 243 may generate the pilot signals to be transmitted in different frequency domains or at different frequencies for each candidate beam to which different beam IDs are assigned and may transmit the pilot signals generated based on the candidate beams to which the different beams ID are assigned in the same time domain or simultaneously. When the pilot signals to be transmitted in the same frequency domain or at the same frequency are generated from the candidate beams to which the same beam ID is assigned, the pilot signal generation unit 243 may generate the pilot signals transmitted in the different time domains or at different timings for each candidate beam to which the different beam ID is assigned or may generate the pilot signals to be generated based on the candidate beams to which the different beam ID is assigned at the same frequency or in the same frequency domain.

The case where the pilot signal generation unit 243 separately transmits the pilot signals in one of the time domain or the frequency domain by the number of different beam IDs has been described. However, the pilot signals may be separately transmitted in any time-frequency resources of the number of different beam IDs using both division of the time domain and division of the frequency domain.

When the same beam ID is assigned to the duplicated candidate beams, the pilot signal generation unit 243 may not generate the pilot signals for each candidate beam or may generate one pilot signal collectively. When the same beam ID is assigned to the duplicated candidate beams, for example, the pilot signal generation unit 243 may generate the pilot signals with one candidate beam among the plurality of duplicated candidate beams, may generate the pilot signals with the beam in a direction between the plurality of duplicated candidate beams, or may generate the pilot signals with the combined beam of the plurality of candidate beams. The pilot signal generation unit 243 outputs the generated pilot signals to the signal conversion unit 22. For example, the pilot signal generation unit 243 generates the plurality of pilot signals and controls directions of the beams in which the pilot signals are transmitted from the antenna 21 by using a beamforming scheme of controlling phases of the generated pilot signals. The signal conversion unit 22 converts the pilot signals input from the pilot signal generation unit 243 from digital signals to analog signals. The pilot signals converted into the analog signals are transmitted to the terminal device 3 via the antenna 21. The antenna 21 transmits the pilot signals with the beams in specific directions, for example, via a plurality of antennas (antennas 21-1, 21-2, and 21-3).

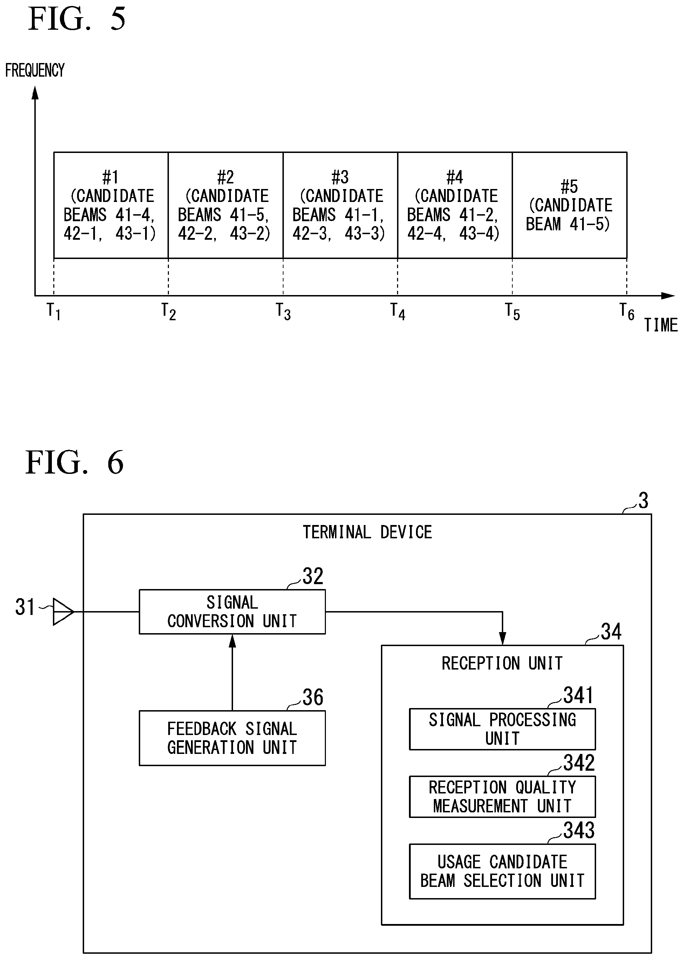

FIG. 5 is a diagram illustrating a relation example of a time-frequency of a pilot signal transmitted from an antenna 21. The pilot signal is transmitted in the same frequency domain in a time-division manner for each beam ID. A direction in which the pilot signal is transmitted may depend on whether the candidate beams are duplicated. For example, since the candidate beams 41-4 and 42-1 are duplicated in the pilot signal generated based on the candidate beams to which the beam ID of #1 is assigned, two directions may be used. Since the candidate beams are not duplicated in the pilot signal generated based on the candidate beams to which the beam ID of #3 is assigned, three directions may be used.

In the example illustrated in FIG. 5, the pilot signal is transmitted in the same frequency domain in the time-division manner for each beam ID, but the present invention is not limited thereto. For example, the pilot signal may be transmitted in the same time domain in a frequency-division manner for each beam ID or the pilot signal may be transmitted both in the time-division manner and the frequency-division manner.

The pilot signal transmitted from the base station device 2 may include information regarding the beam ID or may not include the information regarding the beam ID. For example, the pilot signal generation unit 243 may generate pilot signal including the information regarding the beam ID based on the assignment of the beam ID by the beam ID assignment unit 242 and output the pilot signal to the signal conversion unit 22. When the pilot signal does not include the information regarding the beam ID, the base station device 2 notifies of a transmission timing of the signal with each candidate beam, for example, by beforehand transmitting a timing at which transmission of the signal starts and information regarding a time interval at which the candidate beams are switched.

In the case of a method of generating the pilot signal including the information regarding the beam ID, since signals are transmitted with beams in a plurality of directions at the same time-frequency to the terminal devices 3, there is a possibility of multipath interference occurring. Here, since the same pilot signal including the information regarding the same beam ID is transmitted in a plurality of directions at the same time-frequency, it is possible to prevent deterioration in signal quality due to interference in accordance with a multipath interface compensating method used for a general wireless communication system. In order to compensate for the multipath interference, a time difference in which signals are received with different beams transmitted from the base station device 2 is required to be shorter than an allowable delay time difference of the multipath interference. That is, a time difference in which the terminal device 3 receives the plurality of same pilot signals transmitted at the same time-frequency is required to be shorter than an allowable delay time of the multipath interference. In the case of a method of generating the pilot signal that does not include the information regarding the beam ID, the base station device 2 may not transmit the same pilot signal including the information regarding the same beam ID or may transmit different pilot signals since it is not necessary for the terminal device 3 to extract the information regarding the beam ID from the pilot signal.

Hereinafter, the reception unit 26 will be described below in detail and a configuration of the terminal device 3 will be described. FIG. 6 is a diagram illustrating a configuration example of the terminal device 3 according to the first embodiment. The terminal device 3 includes an antenna 31, a signal conversion unit 32, a reception unit 34, and a feedback signal generation unit 36. The reception unit 34 includes a signal processing unit 341, a reception quality measurement unit 342, and a usage candidate beam selection unit 343.

The antenna 31 receives the pilot signal transmitted from the base station device 2. The signal conversion unit 32 converts the pilot signal received by the antenna 31 from the analog signal to the digital signal. The signal processing unit 341 processes the pilot signal. The signal processing unit 341 acquires the beam ID included in the pilot signal, for example, by processing the pilot signal.

When the pilot signal does not include the information regarding the beam ID, the beam ID cannot be acquired from the pilot signal. Therefore, the reception unit 34 acquires a transmission timing or the like in advance from the base station device 2. For example, the reception unit 34 can acquire the timing at which the transmission of the signal starts and the timing at which each candidate beam is transmitted by acquiring the information regarding the time interval at which the candidate beam is switched and can estimate the beam ID corresponding to the received pilot signal.

The reception quality measurement unit 342 measures reception quality of the pilot signal. The usage candidate beam selection unit 343 selects the candidate beam to be used based on the reception quality of the pilot signal. The usage candidate beam selection unit 343 selects, for example, the candidate beam corresponding to the pilot signal with the best reception quality as the candidate beam to be used.

The feedback signal generation unit 36 generates the feedback signal to be transmitted to the base station device 2. The feedback signal includes information regarding the candidate beam to be used, which is selected by the usage candidate beam selection unit 343. The feedback signal generation unit 36 outputs the feedback signal to the signal conversion unit 32.

The feedback signal is converted into the analog signal by the signal conversion unit 32 and is transmitted from the antenna 31.

Referring back to FIG. 2, the reception unit 26 of the base station device 2 will be described. The reception unit 26 includes a feedback signal processing unit 261 and a usage beam setting unit 262.

The feedback signal is received by the antenna 21 of the base station device 2 and is converted into the digital signal by the signal conversion unit 22. The feedback signal processing unit 261 processes the feedback signal and acquires the information regarding the candidate beam to be used.

The usage beam setting unit 262 sets the beam to be used based on the information regarding the candidate beam to be used, which is included in the feedback signal. The base station device 2 sets the beam to be used during communication with each terminal device 3 by receiving the feedback signal from each terminal device 3. Thereafter, the base station device 2 communicates with each terminal device 3 by transmitting the signal to each terminal device 3 with the set beam.

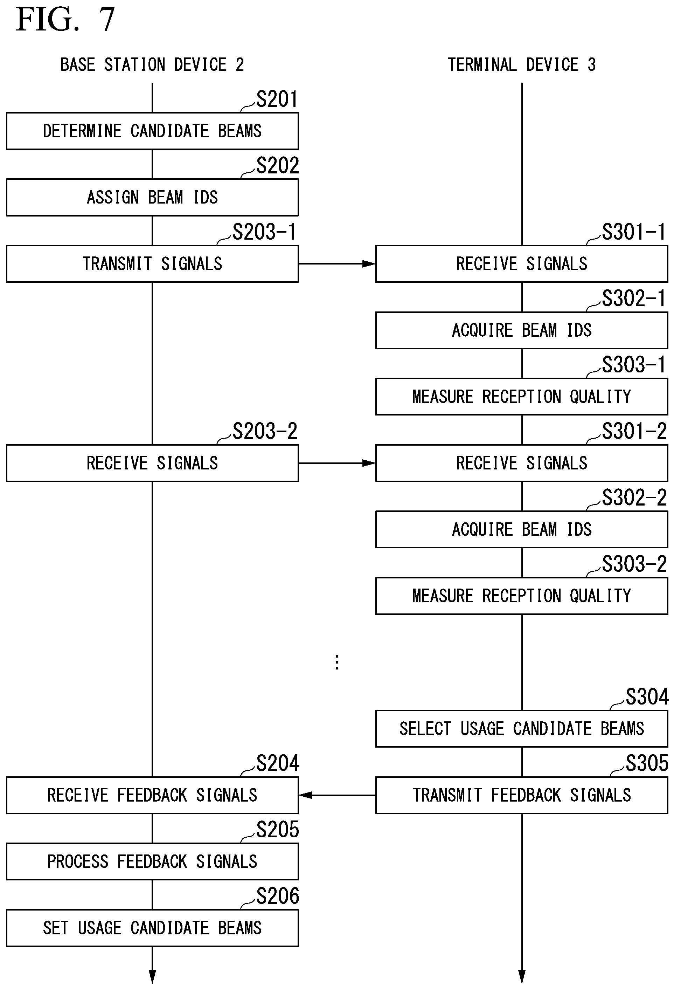

FIG. 7 is a sequence diagram illustrating an operation of the communication system 1. First, the candidate beam determination unit 241 of the base station device 2 determines the candidate beams for each terminal device 3 (step S201). Thereafter, the beam ID assignment unit 242 assigns the beam IDs to the candidate beams (step S202). Here, the beam ID assignment unit 242 assigns the different beam IDs to the candidate beams of the same terminal device 3 and assigns the beam IDs to the candidate beams among the different terminal devices 3 so that the number of combinations of the candidate beams to which the same beam ID is assigned is maximized. When the candidate beam is duplicated between the terminal devices 3, the beam ID assignment unit 242 may assign the same beam ID. Thereafter, the pilot signal generation unit 243 generates the pilot signals, the signal conversion unit 22 converts the pilot signals to the analog signals, and the converted analog signals are transmitted from the antenna 21 to the terminal device 3 (step S203). A transmission order of the pilot signals is based on the beam IDs. For example, the antenna 21 first transmits the pilot signal with the candidate beam of which the beam ID is #1 (step S203-1), subsequently transmits the pilot signal with the candidate beam of which the beam ID is #2 (step S203-2), and the pilot signals are continuously transmitted with all the candidate beams.

The terminal device 3 receives the pilot signals using the antenna 31 (step S301) and the signal conversion unit 32 converts the pilot signals from the analog signals to the digital signals. The signal processing unit 341 processes the pilot signals and acquires the information regarding the beam IDs (step S302). Here, when the received signals are unmodulated wave signals that do not include information regarding the beam IDs, the reception unit 34 acquires the timings at which the candidate beams are transmitted by acquiring the timings at which the transmission of the signals starts and the time intervals at which the candidate beams are switched, and estimates the beam IDs corresponding to the unmodulated wave signals. The reception quality measurement unit 342 measures the reception quality of the received signals (step S303). The terminal devices 3 perform operations of steps S301 to S303 whenever the pilot signals are received. For example, the terminal device 3-1 performs operations of steps S301-1 to S303-1 when the pilot signals transmitted with the candidate beams of which the beam IDs are #1 are received, performs operations of steps S301-2 to S303-2 when the pilot signals transmitted with the candidate beams of which the beam IDs are #2 are received, and performs operations on all the following pilot signals. The other terminal devices 3 measure reception quality of all the transmitted pilot signals by performing the same operations.

The usage candidate beam selection unit 343 selects the candidate beams to be used based on the reception quality (step S304). Thereafter, the feedback signal generation unit 36 generates the feedback signals including the information regarding the candidate beams to be used and the signal conversion unit 32 converts the feedback signals into analog signals, and the converted analog signals are transmitted from the antenna 31 (step S305). The antenna 21 of the base station device 2 receives the feedback signals (step S204), the signal conversion unit converts the feedback signals from the analog signals to the digital signals, the feedback signal processing unit 261 processes the feedback signals to acquire the information regarding usage candidate beams (step S205). The usage beam setting unit 262 sets the beams to be used based on the information regarding the usage candidate beams in each terminal device 3 (step S206).

The base station device 2 assigns the different beam IDs to the candidate beams for the same terminal device 3 and assigns the beam IDs to the candidate beams between the terminal devices 3 so that the maximum number of same beam IDs are assigned. For each candidate beam to which the same beam ID is assigned, the pilot signals to be transmitted in the same time domain or same frequency domain are generated. Accordingly, it is possible to inhibit an increase in time and frequency resources associated with the increase in the terminal devices 3.

The base station device 2 can assign the same beam ID to the duplicated candidate beam and transmit the pilot signal as one candidate beam. For example, with the candidate beams 41-4 and 42-1 that are duplicated candidate beams in FIG. 5 illustrating the time-frequency, the pilot signals are not transmitted with two candidate beams for each terminal device 3 and one pilot signal is transmitted based on two candidate beams. Accordingly, it is possible to save the resources with which one pilot signal is transmitted from time T₁ to time T₂ and it is possible to save resources with which one pilot signal is transmitted from time T₂ to time T₃. In this way, the communication system 1 according to the present embodiment can save resources with which the signals are transmitted when the base station device 2 selects the beams to be used for communication.

### <Other Embodiments>

The embodiment of the present invention has been described in detail above with reference to the drawings. Specific configurations are not limited to the above-described configurations and various design modifications can be made within the scope of the present invention without departing from the gist of the present invention.

Even in a configuration in which the communication system 1 includes one terminal device 3 and a plurality of base station devices 2, as in the embodiment, the terminal device 3 determines a candidate beam for each base station device 2, assigns a beam ID to the candidate beam for the base station device 2, and generates a pilot signal, and thus it is possible to inhibit an increase in time and frequency resources.

The pilot signal can be replaced with a reference signal, a control signal, control information, or a control channel. The beam ID can also be notified of not only with the pilot signal but also the reference signal, the control signal, the control information, or the control channel.

The beam ID may be information regarding a beam. The terminal device 3 may be notified of the beam ID by using resource IDs of reference signals generated based on the candidate beams to which the same beam ID is assigned.

The transmission unit 24 includes the candidate beam determination unit 241, the beam ID assignment unit 242, and the pilot signal generation unit 243. The reception unit 26 includes the feedback signal processing unit 261 and the usage beam setting unit 262. The reception unit 34 includes the signal processing unit 341, the reception quality measurement unit 342, and the usage candidate beam selection unit 343. These constituent elements and the feedback signal generation unit 36 are realized, for example, by causing a hardware processor such as a central processing unit (CPU) to execute a program (software). Some or all of the constituent elements may be realized by hardware (including circuitry) such as a large scale integration (LSI), an application specific integrated circuit (ASIC), a field-programmable gate array (FPGA), or a graphics processing unit (GPU) or may be realized by software and hardware in combination. The program may be stored in advance in a storage device (a storage device including a non-transitory storage medium) such as a hard disk drive (HDD) or a flash memory or may be stored in a detachable storage medium such as a DVD or a CD-ROM (non-transitory storage medium) and installed when the storage medium is mounted on a drive device.

### REFERENCE SIGNS LIST

1 Communication system
2 Base station device
3 Terminal device
21 Antenna
22 Signal conversion unit
24 Transmission unit
241 Candidate beam determination unit
242 Beam ID assignment unit
243 Pilot signal generation unit
26 Reception unit
261 Feedback signal processing unit
262 Usage beam setting unit
31 Antenna
32 Signal Conversion unit
34 Reception unit
341 Signal processing unit
342 Reception quality measurement unit
343 Usage candidate beam selection unit
36 Feedback signal generation unit

## Claims

1. A base station device comprising:
a candidate beam determination unit configured to determine candidate beams that are candidates for a beam of a pilot signal to be transmitted for each terminal device that is a transmission partner;
a beam ID assignment unit configured to assign different beam IDs to the candidate beams of the same terminal device and assign beam IDs to candidate beams among different terminal devices so that the number of combinations of the candidate beams to which the same beam ID is assigned is maximized; and
a pilot signal generation unit configured to generate a pilot signal to be transmitted in a same time domain and a same frequency domain for each candidate beam to which the same beam ID is assigned.

2. The base station device according to claim 1, wherein, when the candidate beam is duplicated between the terminal devices, the beam ID assignment unit assigns the same beam ID to the duplicated candidate beam.

3. The base station device according to claim 1 or 2, wherein the pilot signal generation unit generates a pilot signal including a corresponding beam ID.

4. The base station device according to claim 1 or 2, wherein a difference between times at which a plurality of pilot signals transmitted in the same time domain are received in the terminal devices is less than a time difference of allowable delay of multi-path interference in the pilot signals.

5. A communication system comprising:
the base station device according to claim 1; and
a plurality of terminal devices,
wherein the terminal device includes
a reception quality measurement unit that measures reception quality of a pilot signal,
a usage candidate beam selection unit that selects a candidate beam to be used based on the reception quality and a correspondence relation between a pilot signal and a beam ID of a candidate beam, and
a feedback signal generation unit that generates a feedback signal including information regarding the candidate beam to be used.

6. A beam searching method comprising:
a candidate beam determination step of determining candidate beams that are candidates for a beam of a pilot signal to be transmitted for each terminal device that is a transmission partner;
a beam ID assignment step of assigning a different beam ID to the candidate beam of the same terminal device and assigning beam IDs to candidate beams among different terminal devices so that the number of combinations of the candidate beams to which the same beam ID is assigned is maximized; and
a pilot signal generation step of generating a pilot signal to be transmitted in a same time domain and a same frequency domain for each candidate beam to which the same beam ID is assigned.

7. A program causing a computer to operate as the base station device according to claim 1.
